# FASCICULE DE BREVET EUROPEEN

(11) **EP 2 374 663 B1**
(45) Date de publication et mention de la délivrance du brevet: **19.09.2012**
(21) Numéro de dépôt: 11157472.9
(22) Date de dépôt: 09.03.2011
(51) Int. Cl.: B60R 5/04, B60R 9/10

(54) **Aménagement d'une soute susceptible de recevoir un porte-vélo escamotable**
Anordnung eines Laderaums, der zur Aufnahme eines klappbaren Fahrradträgers geeignet ist.
Loading space arrangement suitable for receiving a retractable bicycle rack

(30) Priorité: 30.03.2010 FR 1052307
(43) Date de publication de la demande: 12.10.2011
(73) Titulaire: Trigano VDL, 75019 Paris (FR)
(72) Inventeur: Job, Guy, 26800, Etoile sur Rhône (FR); Dubrulle, Frédéric, 26600, LA ROCHE DE GLUN (FR)
(74) Mandataire: Martin, Franck-Olivier

(56) Documents cités:
- US-A- 5 690 259
- US-B1- 6 746 200
- US-B1- 7 380 769

## Description

L'invention se rapporte à un aménagement d'une soute de véhicule comportant des rails parallèles pour le coulissement d'un chariot.

L'invention se rapporte plus particulièrement à un aménagement d'une soute de véhicule qui comporte :
- une entrée ouverte longitudinalement vers l'avant ;
- un plancher horizontal ;
- une paroi verticale transversale de fond qui est agencée à l'opposé de l'entrée ;
- un chariot sur lequel est susceptible d'être fixé de manière amovible une charge telle qu'un vélo, une extrémité distale du chariot étant guidée en coulissement sur le plancher entre une position insérée à l'intérieur de la soute et une position horizontale de chargement dans laquelle une partie proximale du chariot est sortie vers l'avant à l'extérieur de la soute.

Les véhicules automobiles roulants tels que les camping-car ou encore les véhicules roulants tractés tels que les caravanes comportent généralement une cabine d'habitation et une soute. Cette dernière permet notamment de stocker des bagages ou autres objets divers.

Les soutes présentent cependant des dimensions qui ne permettent pas de stocker facilement des objets relativement longs et lourds tels que des vélos.

Pour ranger des vélos dans le véhicule, il est alors connu de réaliser un porte-vélo escamotable qui est agencé dans la cabine d'habitation du véhicule.

Cependant, un tel agencement n'est pas très pratique car il empiète sur l'espace de la cabine d'habitation du véhicule.

On connaît aussi des porte-vélo qui sont accrochés à l'extérieur du véhicule, par exemple à l'arrière. Ainsi, il est possible de conserver l'espace de la cabine d'habitation du véhicule dans son intégralité.

Cependant, un tel porte-vélo ne permet pas de protéger efficacement le vélo contre les intempéries. En outre, les vélos risquent d'être volés.

Il est aussi possible concevoir une soute avec des dimensions au sol plus grandes. Cependant, un tel agrandissement est à nouveau réalisé au détriment de l'espace de la cabine d'habitation.

Le document US 6 746 200 B1 est considéré comme l'état de la technique le plus proche, et décrit un aménagement d'un chariot sur lequel est susceptible d'être fixé de manière amovible une charge telle qu'un véhicule, où l'extrémité distale du chariot est susceptible d'être guidée en coulissement vertical le long des rails de guidage, le chariot étant susceptible de basculer vers une position verticale de rangement contre le cadre par coulissement.

Pour résoudre notamment ces problèmes, l'invention propose un aménagement de soute du type décrit au début de cette description, caractérisé en ce que l'extrémité distale du chariot est susceptible d'être guidée en coulissement vertical le long de la paroi de fond, le chariot étant susceptible de basculer vers une position verticale de rangement contre la paroi de fond par coulissement simultané de l'extrémité distale du chariot verticalement et vers le haut le long de la paroi de fond, de l'extrémité proximale du chariot longitudinalement et vers l'arrière sur le plancher.

Selon d'autres caractéristiques de l'invention :
- un tronçon longitudinal d'au moins un rail est fixé sur le plancher, ledit tronçon longitudinal s'étendant longitudinalement depuis une extrémité avant qui est agencée à proximité de l'entrée jusqu'à une extrémité arrière qui est agencée à proximité de la paroi de fond de manière à guider le coulissement longitudinal de l'extrémité distale du chariot ;
- chaque rail comporte un tronçons vertical qui est fixé à la paroi de fond de la soute de manière à guider le coulissement vertical de l'extrémité distale du chariot contre la paroi de fond avec pivotement du chariot autour d'un axe transversal par rapport audit tronçon vertical ;
- la soute comporte deux rails parallèles sur lesquels l'extrémité distale du chariot est montée coulissante ;
- chaque tronçon vertical de rail est lié de manière continue avec le tronçon longitudinal dudit rail par l'intermédiaire d'un tronçon de jonction courbé ;
- l'extrémité distale du chariot montée coulissante par l'intermédiaire d'au moins un coulisseau qui est engagé dans une glissière de chaque rail ;
- l'extrémité proximale du chariot est susceptible de coulisser sur le plancher par l'intermédiaire de premières roulettes ou de patins qui sont guidées latéralement par contact avec la glissière ;
- le chariot comporte des deuxièmes points d'appui proximaux qui sont excentrés de manière qu'en position verticale de rangement, le centre de gravité du chariot chargé soit interposé longitudinalement entre les deuxièmes point d'appui et les tronçons verticaux, l'extrémité proximale du chariot étant en appui vertical sur les deuxièmes points d'appui entre une position intermédiaire dans laquelle le chariot est incliné à l'intérieur de la soute et sa position verticale de rangement ;
- le deuxième point d'appui proximal est formé par des deuxièmes roulettes identiques aux premières roulettes ou par des patins ;
- l'aménagement comporte des moyens d'assistance aux déplacements du chariot qui comportent un lien souple de traction, tel qu'une sangle, qui est fixé à l'extrémité distale du chariot et qui est susceptible d'être enroulé autour d'un axe qui est agencé à proximité de l'extrémité supérieure du tronçon vertical de chaque rail ;
- l'aménagement comporte une barre de renvoi du lien de traction qui est montée coulissante folle le long du tronçon vertical de chaque rail entre une position supérieure vers laquelle elle est poussée par le chariot lors de son retour vers la position de rangement et une position inférieure dans laquelle elle est en butée à l'extrémité inférieure du tronçon vertical de chaque rail de manière à former un renvoi longitudinal pour le lien de traction ;
- l'enroulement et le déroulement du lien de traction autour de son axe est commandé par un moteur électrique ou manuellement ;
- la soute comporte au moins deux montants latéraux, la soute étant susceptible de recevoir au moins une étagère qui est montée sur des taquets qui sont portés par les montants latéraux d'une part, et par le tronçon vertical de chaque rail d'autre part ;
- les taquets sont portés par des coulisseaux qui sont susceptibles d'être reçus dans la glissière du tronçon vertical de chaque rail et fixés par serrage ;
- les montants latéraux sont formés par des glissières similaires à celle du tronçon vertical de chaque rail et qui sont susceptibles de recevoir des taquets portés par des coulisseaux.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective qui représente une soute de véhicule automobile réalisée selon les enseignements de l'invention ;
- la figure 2 est une vue en perspective qui représente la soute de la figure 1 dans laquelle les parois latérales et l'entrée n'ont pas été représentées pour plus de clarté, la soute étant équipés de rails parallèles ;
- la figure 3 est une vue de détail à plus grande échelle qui représente une vue en bout d'un tronçon longitudinal de rail sur lequel un chariot a été monté coulissant ;
- la figure 4 est une vue en perspective qui représente un chariot destiné à porter deux vélos et qui est susceptible d'être monté coulissant sur les rails de la soute ;
- la figure 5 est une vue de côté depuis la droite de la soute de la figure 2 dans laquelle le chariot de la figure 4 occupe une position horizontale de chargement ;
- la figure 6 est une vue similaire à celle de la figure 5 dans laquelle le chariot occupe une position verticale de rangement à l'intérieur de la soute ;
- la figure 7 est une vue de détail qui représente une barre munie de coulisseaux destiné à coulisser dans des glissières des rails de la soute ;
- la figure 8 est une vue de côté depuis la gauche qui représente une barre de renvoi de sangle dans sa position inférieure ;
- la figure 9 est une vue de côté depuis la droite qui représente une face d'arrêt de la paroi de fond de la soute contre laquelle un doigt du chariot est en butée, le chariot étant dans sa position verticale de rangement ;
- la figure 10 est une vue similaire à celle des figures 5 et 6 dans laquelle le chariot occupe une position intermédiaire ;
- la figure 11 est une vue en perspective similaire à celle de la figure 2 dans laquelle la soute comporte une étagère ;
- la figure 12 est une vue de détail à plus grande échelle d'un des taquets utilisés pour maintenir l'étagère de la figure 11 ;
- la figure 13 est une vue de dessus en bout d'un montant d'étagère de la figure 11.

Par la suite, des éléments présentant des fonctions identiques, analogues ou similaires seront désignés par des mêmes numéros de référence.

Pour la suite de la description et pour les revendications, on adoptera à titre non limitatif des orientations longitudinale dirigée d'arrière en avant, transversale dirigée de gauche à droite et verticale dirigée de bas en haut qui sont indiquées par le trièdre « L,V,T » des figures. On comprendra que l'orientation longitudinale de la soute ne correspond pas forcément à l'orientation longitudinale du véhicule dans lequel ladite soute est intégrée.

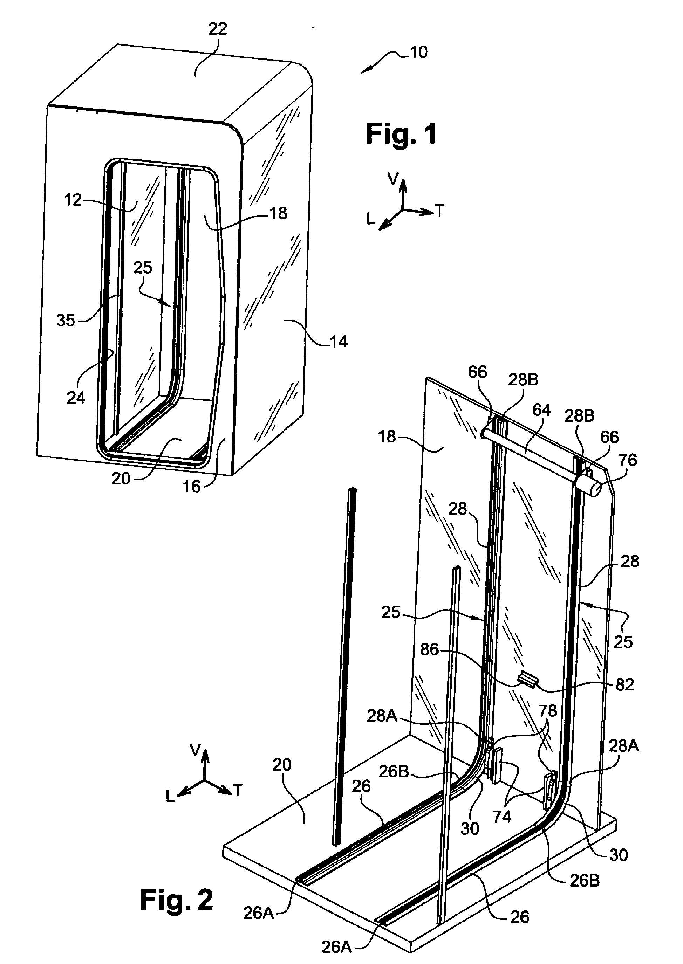

On a représenté à la figure 1 une soute 10 qui est destinée à être intégrée à un véhicule automobile tel qu'un camping-car, ou à un véhicule tracté tel qu'une caravane.

La soute 10 présente la forme d'une boîte globalement parallélépipédique qui est délimitée :
- transversalement dans les deux sens par une paroi verticale longitudinale gauche 12 et par une paroi longitudinale droite 14 ;
- longitudinalement dans les deux sens par une paroi verticale transversale avant 16 et par une paroi verticale transversale arrière de fond 18 ;
- verticalement dans les deux sens par un plancher 20 horizontal inférieur et par un plafond 22 horizontal supérieur.

La paroi avant 16 est ajourée d'une entrée 24 qui est destinée à être fermée par une porte (non représentée). Lorsque la soute 10 est intégrée au véhicule, l'entrée 24 est ici ouverte sur un côté du véhicule ou vers l'arrière du véhicule selon le sens de roulement du véhicule.

La soute 10 présente une profondeur longitudinale inférieure à sa hauteur tandis que sa largeur transversale est inférieure à sa profondeur. Plus particulièrement, la soute 10 est suffisamment haute pour pouvoir stocker un vélo (non représenté) en position verticale, mais sa profondeur est insuffisante pour pouvoir stocker un vélo en position horizontale normale.

Comme représenté plus clairement à la figure 2, la soute 10 est équipée de rails 25 parallèles. Chaque rail 25 présente un tronçon longitudinal 26 qui est fixé sur le plancher 20 ainsi qu'un tronçon vertical 28 qui est fixé contre la face intérieure de la paroi de fond 18.

Le tronçon longitudinal 26 de chaque rail 25 s'étend depuis une extrémité avant 26A qui est agencée à proximité de l'entrée 24 de la soute 10 jusqu'à une extrémité arrière 26B qui est agencée à proximité de la paroi de fond 18.

Le tronçon vertical 28 de chaque rail 25 s'étend depuis une extrémité inférieure 28A qui est agencée à proximité du plancher 20 jusqu'à une extrémité supérieure 28B qui est agencée à proximité du plafond 22.

Chaque rail 25 s'étend ainsi dans un plan vertical longitudinal. La soute 10 présente un rail 25 gauche et un rail 25 droit. Le tronçon longitudinal 26 d'un rail 25 présente une structure identique à celle du tronçon vertical 28 dudit rail 25. Le rail 25 droit présente aussi une structure identique à celle du rail 25 gauche par rapport à un plan de symétrie vertical longitudinal.

Le tronçon longitudinal 26 de chaque rail 25 est ici relié au tronçon vertical 28 dudit rail 25 par un tronçon de jonction 30 courbé en quart de cercle pour former un rail 25 continu et curviligne, c'est-à-dire sans angle. Plus particulièrement, chaque rail 25 gauche, respectivement droit, est réalisé venu de matière, par exemple par cintrage d'un profilé métallique.

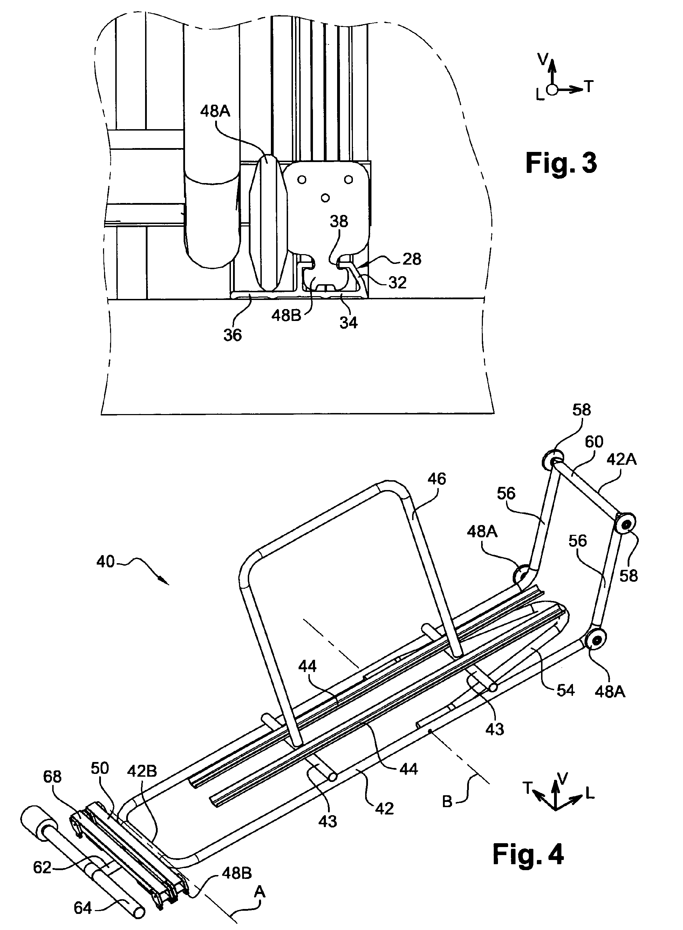

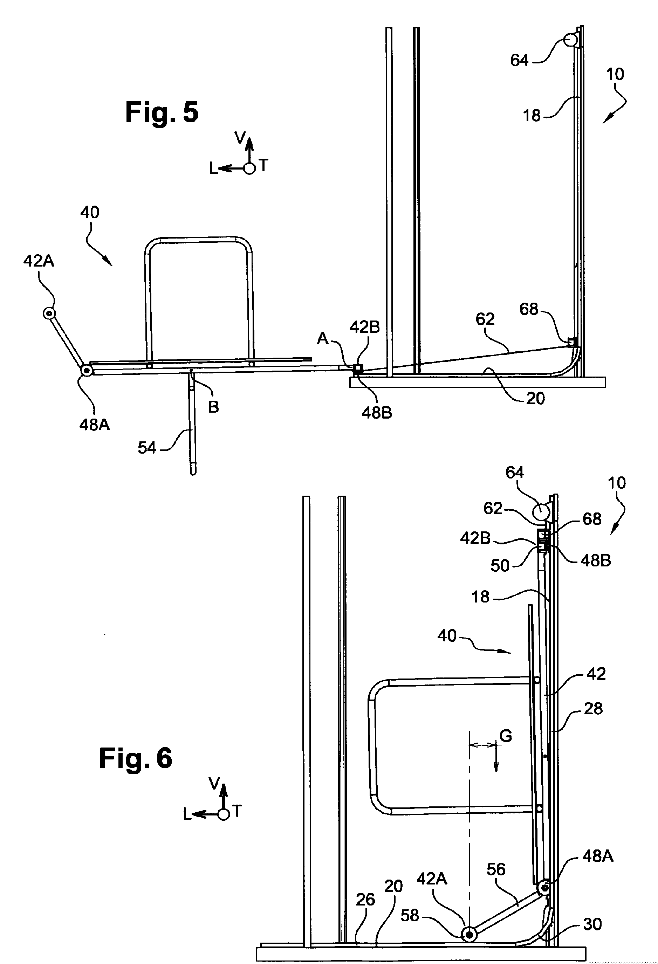

Comme représenté aux figures 4 et 5, contrairement aux autres tronçons 26 et 28, le tronçon de jonction 30 n'est pas plaqué contre l'angle de la soute 10 pour permettre une jonction courbe et en douceur entre les deux tronçons 26 et 28.

Comme représenté plus en détail à la figure 3 en prenant pour exemple le tronçon longitudinal 28 du rail 25 droit, chaque rail 25 présente une glissière 32 qui repose sur la face associée de la soute 10 par une semelle 34. La semelle 34 est bordée par une bande 36 s'étendant transversalement en direction de l'autre rail 25.

La glissière 32 présente ici une rainure 38 d'ouverture orientée à l'opposé de la semelle 34 qui est délimitée transversalement par deux lèvres.

La soute 10 comporte aussi deux montants latéraux 35 dont chacun est respectivement fixé contre la face interne de la paroi gauche 12 et droite 14. Ces montants 35 seront décrits plus en détail par la suite.

La soute 10 ainsi aménagée est susceptible d'être utilisée dans une première configuration dite "porte-vélo" et dans une deuxième configuration dite "étagère". Ces deux configurations seront décrites en détail par la suite.

Selon la première configuration "porte-vélo", la soute 10 ainsi aménagée est susceptible d'être équipée d'un chariot 40 amovible qui est ici destiné à porter deux vélos.

Un tel chariot est représenté en position horizontale à la figure 4. Sauf mention contraire, la description qui suit du chariot 40 est réalisée en référence à la figure 4. On gardera à l'esprit le fait que le chariot est susceptible de changer d'orientation durant son utilisation.

Le chariot 40 comporte un cadre 42 horizontal muni de deux traverses 43. Le cadre 42 s'étend depuis une extrémité proximale 42A qui est agencée vers l'avant à la figure 4, et une extrémité distale 42B qui est agencée vers l'arrière à la figure 4.

Le cadre 42 porte deux gouttières 44 longitudinales parallèles. Un arceau 46 longitudinal s'étend verticalement entre les deux gouttières 44 depuis les traverses 43.

Chaque gouttière 44 est destinée à recevoir les roues d'un vélo (non représenté). L'arceau 46 permet d'appuyer le cadre du vélo pour en empêcher la chute. Le chariot 40 est bien entendu équipé de lanières (non représentées) pour attacher les roues du vélo à la gouttière 44 associée et le cadre du vélo à l'arceau 46. Chaque vélo est ainsi fixé de manière amovible au chariot 40 sans risque de tomber ou de bouger, quelle que soit la position du chariot 40.

Le chariot 40 est destiné à être monté coulissant sur les rails 25 entre :
- une position horizontale de chargement à l'extérieur de la soute 10, comme représentée à la figure 5, dans laquelle le chariot 40 s'étend globalement à l'extérieur depuis l'entrée 24 de la soute 10, et dans laquelle l'extrémité distale 42B du chariot 40 repose sur le plancher 20 de la soute 10 ;
- et une position verticale de rangement à l'intérieur de la soute 10, comme représentée à la figure 6, dans laquelle le chariot 40 est rangé verticalement à proximité de la paroi de fond 18, son extrémité proximale 42A reposant sur le plancher 20 et l'extrémité distale 42B étant agencée à proximité du plafond 22.

Dans sa position de rangement, le chariot 40 et sa charge sont totalement escamotés à l'intérieur de la soute 10.

Le chariot 40 est susceptible d'être déplacé par le coulissement de :
- deux premiers points d'appui proximaux 48A gauche et droit qui sont agencés au voisinage de l'extrémité proximale 42A du chariot 40 ;
- et de deux points d'appui distaux 48B gauche et droit qui sont agencés à l'extrémité distale 42B du chariot 40.

Le coulissement des premiers points d'appui proximaux 48A et distaux 48B est susceptible d'être guidé par les rails 25.

Ainsi le coulissement des points d'appui distaux 48B longitudinalement vers l'arrière le long du tronçon longitudinal 26 des rails 25 provoque le déplacement du chariot 40 depuis sa position horizontale de chargement vers une position insérée à l'intérieur de la soute dans laquelle le chariot est partiellement rentrée dans la soute. Toutefois, le chariot 40 dépasse encore de l'entrée 24 empêchant ainsi sa fermeture.

Le coulissement simultané des points d'appui distaux 48B le long des tronçons verticaux 28 et des premiers points d'appui proximaux 48A le long des tronçons longitudinaux 26 est susceptible de provoquer le basculement guidé du chariot 40 dans un sens ou dans l'autre autour d'un axe transversal, notamment depuis sa position insérée à l'intérieur de la soute 10 vers sa position verticale de rangement dans laquelle le chariot 40 est entièrement compris à l'intérieur de la soute10, autorisant ainsi la fermeture de l'entrée 24.

Plus particulièrement, comme représenté à la figure 4, les premiers points d'appui proximaux 48A sont formés par deux premières roulettes 48A coaxiales d'axe de rotation transversal qui sont chacune agencées à l'extrémité proximale d'un longeron du cadre 42. Chaque première roulette 48A est ainsi agencée de manière à faire sailli légèrement au-dessous du plan horizontal du cadre 42 pour permettre de faire rouler le chariot 40 en position horizontale.

Selon une variante non représentée de l'invention, les premiers points d'appui proximaux sont formés par plus de deux roulettes.

Selon une variante non représentée de l'invention, au moins un ou la totalité des premiers points d'appui proximaux est formé par des patins ou par des rouleaux.

Chaque première roulette 48A est ici destinée à rouler sur la bande 36 d'un rail 25 associé.

Cette disposition permet de dégager facilement les premières roulettes 48A des rails 25 lorsque le chariot 40 est tiré vers sa position horizontale de chargement dans laquelle l'extrémité proximale 42A du chariot 40 est totalement sortie de la soute 10.

En outre, le fait que les premières roulettes 48A roulent sur la bande 36 des rails 25 permet d'éviter de faire des traces de roulement sur le plancher 20 et d'assurer un roulement sans glissement des premières roulettes 48A.

Selon une variante non représentée de l'invention, les rails sont dénués de bande et les roulettes roulent directement sur le plancher et sur la paroi de fond. Les glissières des rails permettent cependant de guider transversalement les roulettes.

Les appuis distaux 48B sont ici des coulisseaux 48B formés par des patins qui sont destinés à être engagé de manière captive dans les glissières 32 des rails 25. Comme représenté à la figure 3, les coulisseaux 48B sont en effet retenus dans les glissières 32 par les lèvres qui bordent la rainure 38.

Les appuis distaux 48B sont agencés sensiblement dans le même plan horizontal que les premières roulettes 48A de manière que le cadre 42 soit sensiblement horizontal lorsque les premiers points d'appui proximaux et les points d'appui distaux sont appuyés sur le tronçon horizontal 26 des rails 25.

Selon une variante non représentée de l'invention, les appuis distaux et proximaux sont agencés de manière que le cadre soit légèrement incliné lorsque lesdits points d'appui distaux et proximaux sont posés sur le plancher. Ceci est notamment le cas lorsque la profondeur longitudinale de la soute est très faible par rapport à la longueur d'un vélo.

Comme représenté à la figure 4, les coulisseaux 48B sont portés par une barre distale 50 qui est fixée à l'extrémité distale 42B du cadre 42 par l'intermédiaire d'une liaison (non représentée) pivotante autour d'un axe "A" transversal de pivotement. Ainsi, l'extrémité distale 42B du chariot 40 est susceptible de pivoter autour de l'axe "A" par rapport aux rails 25.

La barre distale 50 a été représentée plus en détails à la figure 6. A chacune de ses extrémités transversale, elle comporte deux platines 52. La partie inférieure de chaque platine 52 forme un coulisseau 48B qui est apte à être engagé dans une glissière 32 de manière captive. Ainsi, le seul déplacement permis pour la barre distale 50 est le coulissement en translation parallèlement aux rails 25.

Selon une variante non représentée de l'invention, les coulisseaux distaux sont réalisés par des roues tournant autour d'un axe transversale qui sont reçues captives dans des glissières adaptées. La rainure des glissières est alors ouverte latéralement en direction de l'autre rail pour permettre le passage de l'essieu des roues. De tels coulisseaux distaux permettent ainsi une liaison pivotante du chariot par rapport aux rails autour de l'essieu transversale ainsi qu'un guidage en coulissement le long des rails.

Selon encore une autre variante non représentée de l'invention, les coulisseaux distaux sont formés par des roulettes qui sont montés dans des glissières telles qu'elles sont représentées aux figures.

Pour arrêter le chariot 40 dans position de chargement et empêcher les coulisseaux 48B de sortir par l'extrémité avant 26A du tronçon longitudinal 26 des rails 25, une butée (non représentée) est fixée en travers de la glissière 32 à proximité de l'extrémité avant 26A de chaque rail 25.

En outre, pour maintenir le chariot 40 horizontalement dans sa position de chargement, il comporte une béquille 54 qui est montée pivotante autour d'un axe transversal "B" sur le cadre 42 entre :
- une position repliée, comme illustrée aux figures 4 et 6, dans laquelle la béquille 54 est comprise dans le même plan que le cadre 42, l'extrémité libre de la béquille 54 étant orientée vers l'extrémité proximale 42A du chariot 40 par rapport à l'axe "B" de pivotement ;
- et une position dépliée, comme illustrée à la figure 5, dans laquelle elle s'étend perpendiculairement vers le bas au-dessous du cadre 42 pour venir trouver appui sur le sol à l'extérieur de la soute 10, et ainsi maintenir le chariot 40 horizontalement dans sa position de chargement.

La béquille 54 est ici manipulée manuellement entre ses deux positions.

Avantageusement, le cadre 42 comporte des moyens (non représentés) pour retenir la béquille 54 dans sa position repliée. Il s'agit par exemple de moyens par emboîtement élastique de formes complémentaires.

Par ailleurs, au début du déplacement du chariot depuis sa position de chargement vers sa position de rangement, le centre de gravité du chariot 40 chargé est agencé longitudinalement entre les premiers points d'appui proximaux 48A sur le plancher 20 et les points d'appui distaux 48B sur le plancher 20 puis contre la paroi de fond 18. Cette configuration permet un appui stable du chariot 40 contre les faces internes de la soute 10.

Cependant, sur la fin du déplacement du chariot 40 vers sa position de chargement, les premiers points d'appui proximaux 48A sont agencés longitudinalement entre le centre de gravité du chariot 40 chargé et les points d'appui distaux 48B. Il en résulte que le chariot 40 a tendance à être entraîné par son centre de gravité pour tourner autour de ses premiers points d'appui proximaux 48A en direction de l'entrée 24. Les points d'appui distaux 48B ne sont alors plus appuyés longitudinalement vers l'arrière contre la paroi de fond 18, mais ils sont retenus par les glissières 32 des rails 25.

Bien qu'une telle conception soit envisageable pour le chariot 40, elle présente plusieurs inconvénients.

Ainsi, la fixation des tronçons verticaux 28 des rails 25 contre la paroi de fond 18 risque de céder.

En outre, les coulisseaux 48B risquent aussi la rupture.

Enfin, il est possible que le chariot 40 se retrouve bloqué en position de rangement du fait des frottements entre la glissière 32 et les coulisseaux 48B. Il faudrait alors que l'utilisateur fournisse un effort de traction pour faire descendre le chariot vers sa position de chargement.

Pour résoudre ces problèmes, le chariot 40 comporte au moins un pied de calage 56 à son extrémité proximale. Comme illustré à la figure 4, chaque pied de calage 56 forme un angle avec le cadre 42 en s'étendant vers le haut, de préférence au-dessus ou au niveau du centre de gravité de l'ensemble formé par le chariot portant des vélos.

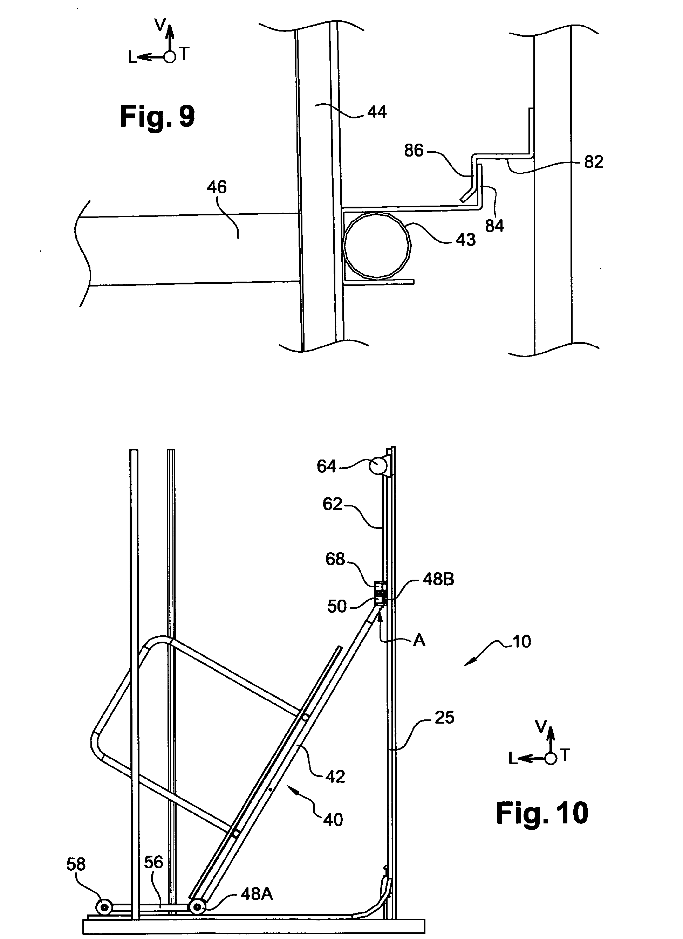

Comme représenté à la figure 6, le pied de calage 56 est destiné à prendre en charge une grande partie, voire la totalité, du poids du chariot et de son chargement en prenant appui sur le plancher 20 lorsque le chariot 40 est déplacé entre une position intermédiaire telle que représentée à la figure 10 et sa position verticale de rangement.

Chaque pied 56 prend appui sur le plancher 20 par l'intermédiaire de deuxièmes roulettes 58 qui forment des deuxièmes points d'appui proximaux 58 excentrés de manière qu'en position verticale de rangement, le centre de gravité du chariot 40 chargé soit interposé longitudinalement entre les deuxièmes point d'appui proximal 58 et les tronçons verticaux 28 des rails 25. Dans sa position de rangement, l'extrémité proximale 42A du chariot 40 est alors en appui vertical sur les deuxièmes points d'appui 58.

Ainsi, lorsque le chariot 40 est déplacé entre sa position intermédiaire et sa position de rangement, son extrémité distale 42B est toujours en appui longitudinalement vers l'arrière contre la paroi de fond 18.

Les deuxièmes roulettes 58 du pied 56 sont avantageusement identiques aux premières roulettes 48A. Ainsi, chaque deuxième roulette 58 du pied 56 est susceptible de rouler sur une bande 36 du rail 25 associé.

Le chariot 40 comporte en outre une poignée 60 à son extrémité proximale.

Des moyens d'assistance aux déplacements du chariot 40 sont aussi susceptibles d'être agencés dans la soute 10.

Les moyens d'assistance comportent un lien souple de traction qui est ici une sangle 62.

Selon une variante non représentée de l'invention, le lien de traction peut être une corde, un câble, une chaîne ou tout autre type de lien souple susceptible de tirer le chariot et de s'enrouler autour d'un axe.

La sangle 62 est enroulée autour d'un axe rotatif 64. L'axe rotatif 64 est monté à proximité de l'extrémité supérieure 28B des rails 25, et il est porté par des paliers 66 qui sont fixés à la paroi de fond 18, comme cela est représenté aux figures 2, 5 et 6.

Une extrémité libre de la sangle 62 est fixée à l'extrémité distale 42B du chariot 40. La sangle 62 est ici fixée au milieu de la barre distale 50.

Etant donné la forme coudée des rails 25, les moyens d'assistance comportent aussi une barre 68 de renvoi de la sangle 62, comme représenté à la figure 5. La barre de renvoi 68 présente une structure identique à celle de la barre distale 50. La description en référence à la figure 6 s'applique donc aussi à la barre de renvoi 68.

La barre de renvoi 68 est montée coulissante de manière folle le long du tronçon vertical 68 des rails par l'intermédiaire de coulisseaux 48B entre :
- une position supérieure telle que représentée à la figure 6 et vers laquelle elle est poussée par la barre distale 50 lors de la montée du chariot 40 vers sa position de rangement ;
- et une position inférieure telle que représentée à la figure 5 et vers laquelle elle descend par gravité lorsque le chariot 40 est tiré vers sa position de chargement, la barre de renvoi 68 divisant alors la sangle en un brin sensiblement longitudinal parallèle au plancher 20 et en un brin vertical parallèle à la paroi de fond 18.

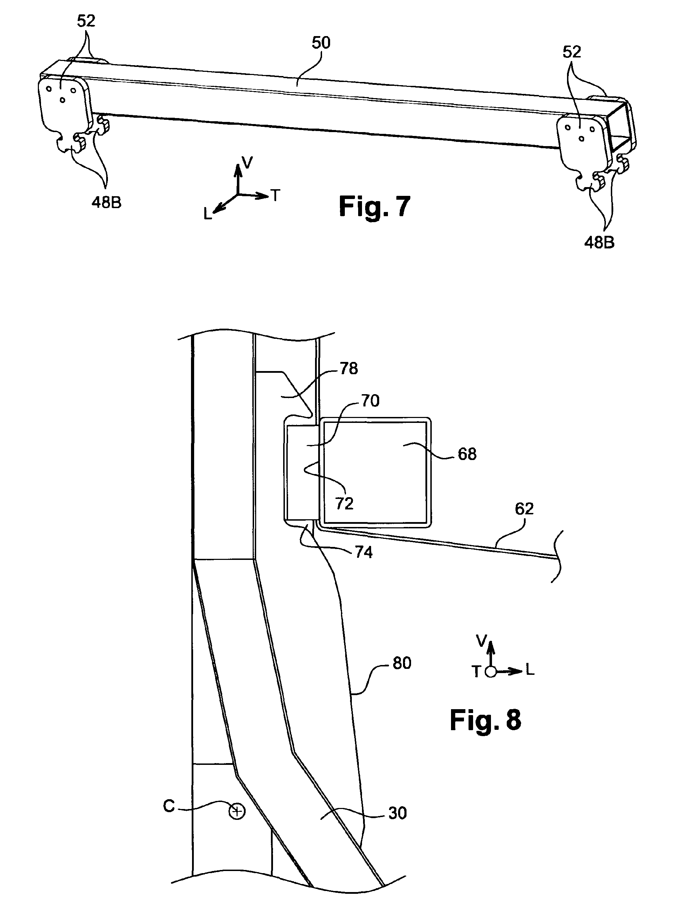

Comme représenté aux figures 2 et figure 8, à la différence de la barre distale 50, la barre de renvoi 68 comporte deux cales 70 qui s'étend en saillie vers l'arrière par rapport à sa face verticale arrière 72. Ces cales 70 sont destinées à venir en butée contre des butées 74 fixées aux parois de la soute 10 pour empêcher la barre de renvoi 68 de descendre au-delà de sa position inférieure.

L'axe rotatif 64 est ici entraîné en rotation, dans un sens ou dans l'autre, par un moteur électrique 76 qui est susceptible d'être commandé par un utilisateur. Le moteur 76 permet ainsi de remonter le chariot depuis sa position de chargement vers sa position de rangement en enroulant la sangle autour de son axe 64. La sangle 62 est susceptible de tirer horizontalement le chariot 40 vers l'intérieur de la soute 10 grâce à la barre de renvoi 68.

Cependant, la sangle 62 est mise sous tension lors de son rembobinage autour de l'axe rotatif 64. La barre de renvoi 68 étant folle, il est nécessaire de la retenir dans sa position inférieure tant que le chariot 40 doit être tiré horizontalement. Or, la tension de la sangle 62 a tendance à pousser la barre de renvoi 68 vers le haut.

Pour éviter ce problème, la barre de renvoi 68 est maintenue temporairement dans sa position inférieure par des crochets 78 montés pivotants ou coulissants sur la paroi de fond 18 autour d'un axe "C" transversal inférieur entre :
- une position avant de blocage vers laquelle ils sont rappelés élastiquement et dans laquelle le crochet 78 coopère avec une cale 70 pour bloquer le coulissement de la barre de renvoi 68 vers le haut, comme illustré à la figure 8 ;
- et une position arrière de libération dans laquelle le crochet 78 est pivoté longitudinalement vers l'arrière pour libérer le coulissement de la barre de renvoi 68 vers le haut.

Comme cela est visible à la figure 8, chaque crochet comporte dans sa partie inférieure une came 80. Ainsi, lorsque la barre distale 50 du chariot 40 parcourt le tronçon de jonction 30 vers le haut, elle pousse la came 80 de manière à faire pivoter le crochet 78 vers sa position de libération à l'encontre de l'effort de rappel élastique. En effet, lorsque la barre distale 50 atteint le tronçon de jonction 30, la sangle 62 doit alors tirer verticalement vers le haut le chariot 40. La barre de renvoi 68 ne joue alors plus de rôle et elle peut remonter vers sa position supérieure en étant poussée par le chariot 40.

Par ailleurs, comme représenté aux figures 2 et 9, pour bloquer le coulissement du chariot 40 vers le haut dans sa position de rangement, la paroi de fond 18 comporte une face d'arrêt 82. A cet effet, le chariot comporte un doigt 84 dont l'extrémité supérieure libre est susceptible de venir en contact avec la face d'arrêt 82 lorsque le chariot 40 est dans sa position verticale de rangement. Le doigt 84 n'est pas visible à la figure 4 car il est agencé sous la traverse 43 avant.

La face d'arrêt 82 est ici portée par une tôle élastiquement déformable qui comporte en outre une aile 86 qui s'étend verticalement vers le bas depuis un bord d'extrémité avant de la face d'arrêt 82. L'aile 86 est déformable élastiquement et elle est susceptible d'exercer une pression longitudinalement vers l'arrière sur le doigt afin d'immobiliser totalement le chariot 40 en position verticale de rangement par rapport à la paroi de fond 18. Ceci permet notamment d'éviter au chariot de faire du bruit en heurtant les rails 25 lorsque le véhicule roule.

Lors de l'utilisation du chariot, en partant de la position horizontale de chargement telle que représentée à la figure 5, l'utilisateur charge et attache des vélos (non représentés) sur le chariot 40.

Puis, il actionne le moteur électrique 76 de manière à enrouler la sangle 62 autour de son axe rotatif 64. La sangle 62 se tend et, grâce à la barre de renvoi 68, elle tire longitudinalement vers l'arrière l'extrémité distale 42B du chariot 40.

L'utilisateur prend alors l'extrémité proximale du chariot 40 par sa poignée 60 pour accompagner le déplacement longitudinal du chariot 40 à l'intérieur de la soute 10. L'extrémité distale 42B du chariot 40 coulisse alors longitudinalement vers l'arrière le long des tronçons longitudinaux 26 des rails par l'intermédiaire des coulisseaux 48B.

Etant donné la profondeur longitudinale insuffisante de la soute 10, la barre distale 50 atteint le tronçon de jonction 30 des rails 25 avant que l'utilisateur n'ait pu poser les premières roulettes 48A sur les bandes 36 des rails.

La barre distale 50 appuie alors sur les cames 80 des crochets 78 pour les commander vers leur position de libération afin de pouvoir pousser la barre de renvoi 68 le long du tronçon vertical 28 des rails 25 vers le haut.

A partir de ce moment, la sangle 62 tire l'extrémité distale 42B du chariot 40 verticalement vers le haut le long du tronçon vertical 48 des rails. Le chariot commence alors à basculer dans un sens anti-horaire selon la figure 5.

L'utilisateur peut alors poser les premières roulettes 48A sur les bandes 36 du tronçon longitudinal 26 des rails. Les deuxièmes roulettes 58 sont alors agencées verticalement au-dessus du plancher 20.

L'enroulement de la sangle 62 se poursuit en tirant l'extrémité distale 42B du chariot 40 vers le haut le long du tronçon vertical 28 des rails, tandis que l'extrémité proximale 42A du chariot 40 coulisse horizontalement le long du tronçon longitudinal 26 des rails par l'intermédiaire des premières roulettes 48A. Ce coulissement simultané des deux extrémités 42A, 42B du chariot 40 dans deux directions perpendiculaires a pour effet un basculement du chariot 40 dans un sens anti-horaire selon les figures 4 et 5 tout en rapprochant le centre de gravité du chariot 40 chargé vers la paroi de fond 18.

Lorsque le chariot 40 atteint sa position intermédiaire, telle que représentée à la figure 10, il est suffisamment incliné pour que les deuxièmes roulettes 58 entrent en contact avec les bandes 36 du tronçon longitudinal 26 des rails.

En poursuivant l'enroulement de la sangle 62 et le coulissement vers le haut de l'extrémité distale 42B, le chariot 40 bascule alors dans un sens anti-horaire par rapport à ses deuxièmes roulettes 58, provoquant le décollage vers le haut des premières roulettes 48A.

Lorsque le chariot 40 arrive dans sa position de rangement, le cadre 42 est sensiblement vertical. Le chariot 40 est alors suspendu à la sangle 62 de manière que les deuxièmes roulettes 58 soient décollés du plancher 20. Le poids du chariot 40 chargé est alors pris en charge principalement par la sangle 62 enroulée autour de son axe rotatif 64. Pour une faible partie, le poids est pris en charge par les appuis distaux 48B qui sont appuyés longitudinalement vers l'arrière contre la paroi de fond 18.

Selon une variante non représentée de l'invention, lorsque le chariot 40 est dans sa position de rangement, une partie du poids est pris en charge par l'appui vertical vers le bas des deuxièmes roulettes 58 sur le plancher (pas vrai, pais on garde quand même), pour soulager un peu la sangle 62.

Le doigt 84 du chariot 40 est alors en butée contre la face d'arrêt 82 de la paroi de fond 18, et il est engagé derrière l'aile élastique 86. Le chariot 40 est ainsi solidement maintenu dans sa position de rangement.

Lorsque l'utilisateur souhaite sortir les vélos de la soute 10, il actionne le moteur électrique 76 de manière à dérouler la sangle 62. Le chariot 40 est alors entièrement soumis à la gravité. Le chariot 40 est entraîné vers le bas par son propre poids.

Le fait que les deuxièmes roulettes 58 soient excentrées par rapport au centre de gravité du chariot 40 permet d'amorcer naturellement le basculement du chariot dans un sens horaire selon la figure 6.

La vitesse de déroulement de la sangle 62 permet de réguler la vitesse à laquelle le chariot 40 descend vers sa position de chargement.

Lors de son déplacement vers sa position de chargement, le chariot 40 réalise en sens inverse le parcours décrit précédemment lors de son rangement.

Lorsque la barre distale 50 du chariot 40 aborde le tronçon de jonction 30, elle appui de nouveau contre la came 80 des crochets 78 pour commander ces derniers vers leur position de libération. Ainsi, la barre de renvoi 68, qui est descendue le long des tronçons verticaux 28 en appui sur la barre distale 50, est susceptible de venir en butée contre les butées 74 sans être gênée par les crochets 78.

Puis, lorsque la barre distale 50 est descendue vers le tronçon longitudinal 26, les crochets 78 sont rappelés élastiquement vers la position de blocage pour bloquer la barre de renvoi 68 dans sa position inférieure.

Pour finir de sortir le chariot 40 vers sa position de chargement, c'est alors à l'utilisateur de tirer le chariot longitudinalement vers l'avant par sa poignée 60, puis de déplier la béquille 54.

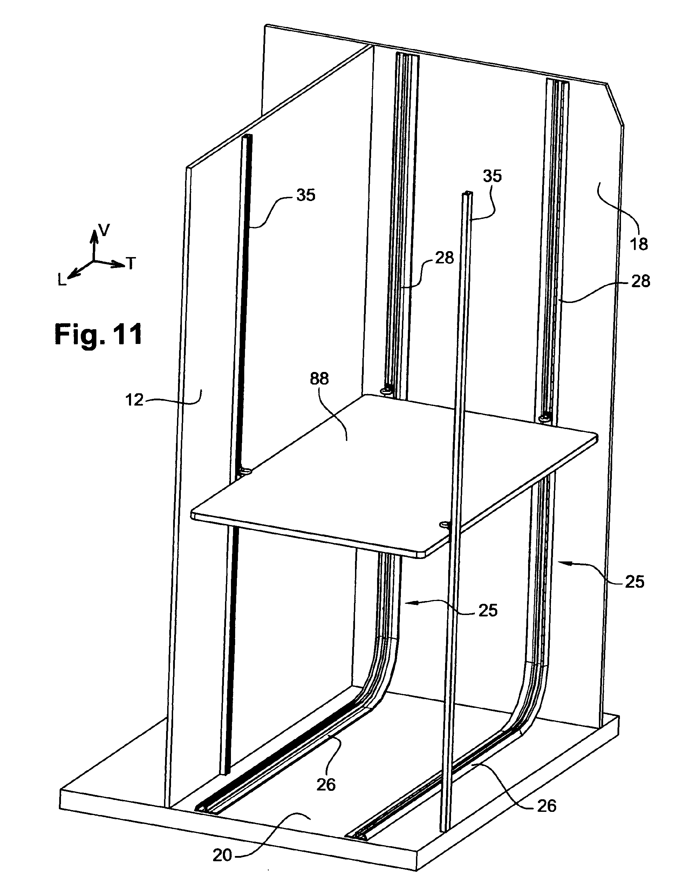

La configuration "étagère" de la soute 10 est représentée aux figures 11 à 13. Dans cette configuration, le chariot 40 amovible a été retiré de la soute 10 et détaché de la sangle 62.

Dans l'exemple représenté à la figure 11, il ne reste plus que les rails 25 et les deux montants 35.

Selon une variante non représentée de l'invention, la soute peut encore être équipée des éléments fixes destinés à coopérer avec le chariot 40, comme cela est représenté à la figure 2, sans que cela n'empêche l'installation d'étagères.

La soute 10 comporte ici une étagère 88 qui est montée sur quatre taquets 90 qui sont portés par les montants latéraux d'une part, et par les tronçons verticaux 28 des rails 25 d'autre part.

On comprendra que la soute 10 peut contenir plusieurs étagères 88 similaires.

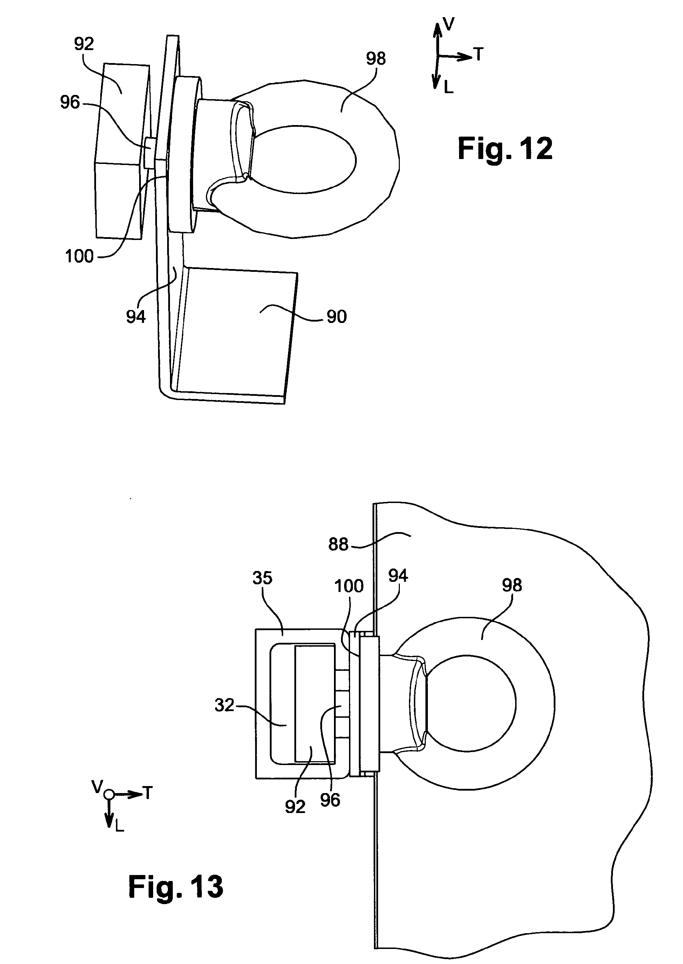

Les taquets 90 sont tous identiques entre eux. Un taquet 90 est représenté plus en détail à la figure 12. Il est porté un coulisseau 92 qui est susceptible d'être reçu dans les glissières 32 des tronçons verticaux 28 des rails 25.

Le taquet 90 comporte plus particulièrement une aile 94 qui s'étend verticalement vers le haut. L'aile 94 est traversée par une tige filetée 96. Une extrémité libre de la tige filetée 96 comporte un anneau de serrage 98 tandis que l'autre extrémité libre de la tige filetée 96 est reçue dans un taraudage fileté du coulisseau 92. L'anneau de serrage 98 comporte une face d'épaulement 100 qui est susceptible de venir en appui contre l'aile 94.

L'anneau de serrage 98 est susceptible de pivoter par rapport à la tige 96 autour d'un axe transversale pour permettre le passage de l'étagère.

L'anneau 98 peut aussi être avantageusement utilisé comme un point d'ancrage, par exemple pour fixer des objets ou une bâche sur les étagères au moyen de liens.

Comme représenté à la figure 13, le coulisseau 92 est susceptible d'être reçu dans une glissière 32 et d'être fixé par serrage.

Afin de simplifier le montage des étagères et de diminuer les coûts de production, les montants latéraux 35 sont formés par des glissières 32 identiques à celle des tronçons verticaux 28 des rails 25 et qui sont susceptibles de recevoir des taquets 90 portés par des coulisseaux 92 identiques à ceux décrits précédemment.

Une telle installation permet ainsi à un utilisateur de régler librement la hauteur des étagères dans la soute 10, et de régler l'horizontalité ou l'inclinaison de l'étagère en fonction de l'usage qui lui est destiné.

## Revendications

1. Aménagement d'une soute (10) de véhicule qui comporte :
- une entrée (24) ouverte longitudinalement vers l'avant ;
- un plancher (20) horizontal ;
- une paroi (18) verticale transversale de fond qui est agencée à l'opposé de l'entrée (24) ;
- un chariot (40) sur lequel est susceptible d'être fixé de manière amovible une charge telle qu'un vélo, une extrémité distale (42B) du chariot (40) étant guidée en coulissement sur le plancher (20) entre une position insérée à l'intérieur de la soute (10) et une position horizontale de chargement dans laquelle une partie proximale (42A) du chariot (40) est sortie vers l'avant à l'extérieur de la soute (10) ;
**caractérisé en ce que** l'extrémité distale (42B) du chariot (40) est susceptible d'être guidée en coulissement vertical le long de la paroi de fond (18), le chariot (40) étant susceptible de basculer vers une position verticale de rangement contre la paroi de fond (18) par coulissement simultané :
- de l'extrémité distale (42B) du chariot (40) verticalement et vers le haut le long de la paroi de fond (18) ;
- de l'extrémité proximale (42A) du chariot (40) longitudinalement et vers l'arrière sur le plancher (20).

2. Aménagement selon la revendication précédente, **caractérisé en ce qu'**un tronçon longitudinal (26) d'au moins un rail (25) est fixé sur le plancher (20), ledit tronçon longitudinal (26) s'étendant longitudinalement depuis une extrémité avant (26A) qui est agencée à proximité de l'entrée (24) jusqu'à une extrémité arrière (26B) qui est agencée à proximité de la paroi de fond (18) de manière à guider le coulissement longitudinal de l'extrémité distale (42B) du chariot (40).

3. Aménagement selon la revendication précédente, **caractérisé en ce que** chaque rail (25) comporte un tronçon vertical (28) qui est fixé à la paroi de fond (18) de la soute (10) de manière à guider le coulissement vertical de l'extrémité distale (42B) du chariot (40) contre la paroi de fond (18) avec pivotement du chariot (40) autour d'un axe transversal par rapport audit tronçon vertical (28).

4. Aménagement selon l'une quelconque des revendications 2 ou 3, **caractérisé en ce que** la soute (10) comporte deux rails (25) parallèles sur lesquels l'extrémité distale (42B) du chariot (40) est montée coulissante.

5. Aménagement selon la revendication précédente, **caractérisé en ce que** chaque tronçon vertical (28) de rail (25) est lié de manière continue avec le tronçon longitudinal (26) dudit rail (25) par l'intermédiaire d'un tronçon de jonction (30) courbé.

6. Aménagement selon l'une quelconque des revendications 2 à 5, **caractérisé en ce que** l'extrémité distale (42B) du chariot (40) est montée coulissante par l'intermédiaire d'au moins un coulisseau (48B) qui est engagé dans une glissière (32) de chaque rail (25).

7. Aménagement selon la revendication précédente, **caractérisé en ce que** l'extrémité proximale (42A) du chariot (40) est susceptible de coulisser sur le plancher (20) par l'intermédiaire de premières roulettes (48A) ou de patins qui sont guidées latéralement par contact avec les rails (25).

8. Aménagement selon l'une quelconque des revendications précédentes, **caractérisé en ce que** le chariot (40) comporte des deuxièmes points d'appui proximaux (58) qui sont excentrés de manière qu'en position verticale de rangement, le centre de gravité du chariot (40) chargé soit interposé longitudinalement entre les deuxièmes point d'appui (58) et les tronçons verticaux (28), l'extrémité proximale (42A) du chariot (40) étant en appui vertical sur les deuxièmes points d'appui (58) entre une position intermédiaire dans laquelle le chariot (40) est incliné à l'intérieur de la soute et sa position verticale de rangement.

9. Aménagement selon la revendication précédente, **caractérisé en ce que** le deuxième point d'appui proximal (58) est formé par des deuxièmes roulettes (58) identiques aux premières roulettes (48A) ou par des patins.

10. Aménagement selon l'une quelconque des revendications précédentes, **caractérisé en ce qu'**il comporte des moyens d'assistance aux déplacements du chariot (40) qui comportent un lien souple de traction (62), tel qu'une sangle, qui est fixé à l'extrémité distale (42B) du chariot (40) et qui est susceptible d'être enroulé autour d'un axe rotatif (64) qui est agencé à proximité de l'extrémité supérieure (28B) du tronçon vertical (28) de chaque rail (25).

11. Aménagement selon la revendication précédente, **caractérisé en ce qu'**il comporte une barre de renvoi (68) du lien de traction (62) qui est montée coulissante folle le long du tronçon vertical (28) de chaque rail (25) entre une position supérieure vers laquelle elle est poussée par le chariot (40) lors de son retour vers la position de rangement et une position inférieure dans laquelle elle est en butée à l'extrémité inférieure du tronçon vertical (28) de chaque rail (25) de manière à former un renvoi longitudinal pour le lien de traction (62).

12. Aménagement selon l'une quelconque des revendications 10 ou 1 1 , **caractérisé en ce que** l'enroulement et le déroulement du lien de traction (62) autour de son axe rotatif (64) est commandé par un moteur électrique (76) ou manuellement.

13. Aménagement selon l'une quelconque des revendications 2 à 12, **caractérisé en ce que** la soute (10) comporte au moins deux montants latéraux (35), et **en ce que** la soute (10) est susceptible de recevoir au moins une étagère (88) qui est montée sur des taquets (90) qui sont portés par les montants latéraux (35), d'une part, et par le tronçon vertical (28) de chaque rail (25), d'autre part.

14. Aménagement selon la revendication précédente, **caractérisé en ce que** les taquets (90) sont portés par des coulisseaux (92) qui sont susceptibles d'être reçus dans la glissière (32) du tronçon vertical (28) de chaque rail (25) et fixés par serrage.

15. Aménagement selon la revendication précédente, **caractérisé en ce que** les montants latéraux (35) sont formés par des glissières (32) similaires à celle du tronçon vertical (28) de chaque rail (25) et qui sont susceptibles de recevoir des taquets (90) portés par des coulisseaux (92).

## Claims

1. Vehicle hold facility (10) which comprises:
- an entry (24) which is open longitudinally at the front;
- a horizontal floor (20);
- a transverse vertical base wall (18) which is arranged opposite the entry (24);
- a carriage (40) on which there can be secured in a removable manner a load such as a bicycle, a distal end (42B) of the carriage (40) being guided in sliding on the floor (20) between a position in which it is inserted in the interior of the hold (10), and a horizontal loading position in which a proximal part (42A) of the carriage (40) extends at the front, to the exterior of the hold (10);
**characterised in that** the distal end (42B) of the carriage (40) can be guided in vertical sliding along the base wall (18), the carriage (40) being able to tilt towards a vertical storage position against the base wall (18) by simultaneous sliding of the:
- distal end (42B) of the carriage (40), vertically and upwards along the base wall (18);
- proximal end (42A) of the carriage (40), longitudinally and rearwards on the floor (20).

2. Facility according to the preceding claim, **characterised in that** a longitudinal section (26) of at least one rail (25) is secured to the floor (20), the said longitudinal section (26) extending longitudinally from a front end (26A) which is arranged in the vicinity of the entry (24) as far as a rear end (26B) which is arranged in the vicinity of the base wall (18), such as to guide the longitudinal sliding of the distal end (42B) of the carriage (40).

3. Facility according to the preceding claim, **characterised in that** each rail (25) comprises a vertical section (28) which is secured to the base wall (18) of the hold (10), such as to guide the vertical sliding of the distal end (42B) of the carriage (40) against the base wall (18), with pivoting of the carriage (40) around an axis which is transverse relative to the said vertical section (28).

4. Facility according to either of claims 2 or 3, **characterised in that** the hold (10) comprises two parallel rails (25) on which the distal end (42B) of the carriage (40) is fitted such as to slide.

5. Facility according to the preceding claim, **characterised in that** each vertical section (28) of rail (25) is connected in a continuous manner with the longitudinal section (26) of the said rail (25) by means of a curved joining section (30).

6. Facility according to any one of claims 2 to 5, **characterised in that** the distal end (42B) of the carriage (40) is fitted such as to slide by means of at least one slider (48B) which is engaged in a slide (32) of each rail (25).

7. Facility according to the preceding claim, **characterised in that** the proximal end (42A) of the carriage (40) can slide on the floor (20) by means of first rollers (48A) or runners which are guided laterally by contact with the rails (25).

8. Facility according to any one of the preceding claims, **characterised in that** the carriage (40) comprises two proximal support points (58) which are eccentric, such that in the vertical storage position, the centre of gravity of the loaded carriage (40) is interposed longitudinally between the second support points (58) and the vertical sections (28), the proximal end (42A) of the carriage (40) being supported vertically on the two support points (58), between an intermediate position in which the carriage (40) is inclined in the interior of the hold, and its vertical storage position.

9. Facility according to the preceding claim, **characterised in that** the second proximal support point (58) is formed by second rollers (58) which are identical to the first rollers (48A), or by runners.

10. Facility according to any one of the preceding claims, **characterised in that** it comprises means for assistance with the displacements of the carriage (40) comprising a flexible traction link (62) such as a strap, which is secured to the distal end (42B) of the carriage, and can be rolled around a rotary shaft (64) which is arranged in the vicinity of the upper end (28B) of the vertical section (28) of each rail (25).

11. Facility according to the preceding claim, **characterised in that** it comprises a bar (68) to return the traction link (62) which is fitted such as to slide idly along the vertical section (28) of each rail (25), between an upper position towards which it is thrust by the carriage (40) during its return towards the storage position, and a lower position in which it abuts the lower end of the vertical section (28) of each rail (25), such as to form a longitudinal return for the traction link (62).

12. Facility according to either of claims 10 or 11, **characterised in that** the winding and unwinding of the traction link (62) around its rotary shaft (64) is controlled by an electric motor (76), or manually.

13. Facility according to any one of claims 2 to 12, **characterised in that** the hold (10) comprises at least two lateral uprights (35), and **in that** the hold (10) can receive at least one shelf (88) which is fitted on carriers (90) which are supported by the lateral uprights (35) on the one hand, and by the vertical section (28) of each rail (25) on the other hand.

14. Facility according to the preceding claim, **characterised in that** the carriers (90) are supported by sliders (92) which can be received in the slide (32) of the vertical section (28) of each rail (25), and secured by clamping.

15. Facility according to the preceding claim, **characterised in that** the lateral uprights (35) are formed by slides (32) which are similar to that of the vertical section (28) of each rail (25), and can receive carriers (90) which are supported by sliders (92).

## Patentansprüche

1. Ausrüstung für ein Fahrzeuggepäckfach (10), die umfasst:
- einen in Längsrichtung nach vorn offenen Einlass (24);
- einen horizontalen Boden (20);
- eine vertikale transversale Rückwand (18), die gegenüber dem Einlass (24) angeordnet ist;
- einen Schlitten (40), auf dem eine Ladung wie etwa ein Fahrrad abnehmbar fixiert werden kann, wobei ein distales Ende (42B) des Schlittens (40) auf dem Boden (20) zwischen einer in das Gepäckfach (10) eingesetzten Position und einer horizontalen Beladungsposition, in der ein proximaler Teil (42A) des Schlittens (40) aus dem Gepäckfach (10) nach vorn vorsteht, gleitend geführt wird;
**dadurch gekennzeichnet, dass** das distale Ende (42B) des Schlittens (40) vertikal längs der Bodenwand (18) gleitend geführt werden kann, wobei der Schlitten (40) durch gleichzeitiges Gleiten:
- des distalen Endes (42B) des Schlittens (40) vertikal und nach oben längs der Rückwand (18);
- des proximalen Endes (42A) des Schlittens (40) in Längsrichtung und nach hinten auf dem Boden (20) in eine vertikale Verstauposition gegen die Rückwand (18) kippen kann.

2. Ausrüstung nach dem vorhergehenden Anspruch, **dadurch gekennzeichnet, dass** ein longitudinales Teilstück (26) wenigstens einer Schiene (25) auf dem Boden (20) fixiert ist, wobei das longitudinale Teilstück (26) in Längsrichtung von einem vorderen Ende (26A), das in der Nähe des Einlasses (24) angeordnet ist, bis zu einem hinteren Ende (26B), das in der Nähe der Rückwand (18) angeordnet ist, verläuft, derart, dass es das longitudinale Gleiten des distalen Endes (42B) des Schlittens (40) führt.

3. Ausrüstung nach dem vorhergehenden Anspruch, **dadurch gekennzeichnet, dass** jede Schiene (25) ein vertikales Teilstück (28) aufweist, das an der Bodenwand (18) des Gepäckfachs (10) in der Weise fixiert ist, dass es das vertikale Gleiten des distalen Endes (42B) des Schlittens (40) gegen die Rückwand (18) mit einer Schwenkung des Schlittens (40) um eine in Bezug auf das vertikale Teilstück (28) transversale Achse führt.

4. Ausrüstung nach einem der Ansprüche 2 oder 3, **dadurch gekennzeichnet, dass** das Gepäckfach (10) zwei parallele Schienen (25) aufweist, auf denen das distale Ende (42B) des Schlittens (40) gleitend montiert ist.

5. Ausrüstung nach dem vorhergehenden Anspruch, **dadurch gekennzeichnet, dass** das vertikale Teilstück (28) der Schiene (25) mit dem longitudinalen Teilstück (26) der Schiene (25) über ein gekrümmtes Verbindungsteilstück (30) ununterbrochen verbunden ist.

6. Ausrüstung nach einem der Ansprüche 2 bis 5, **dadurch gekennzeichnet, dass** das distale Ende (42B) des Schlittens (40) mittels wenigstens eines Gleiters (48B), der in einer Gleitschiene (32) jeder Schiene (25) in Eingriff ist, gleitend montiert ist.

7. Ausrüstung nach dem vorhergehenden Anspruch, **dadurch gekennzeichnet, dass** das proximale Ende (42A) des Schlittens (40) auf dem Boden (20) mittels erster Rollen (48A) oder Kufen, die durch Kontakt mit den Schienen (25) seitlich geführt werden, gleiten kann.

8. Ausrüstung nach einem der vorhergehenden Ansprüche, **dadurch gekennzeichnet, dass** der Schlitten (40) zweite proximale Abstützpunkte (58) aufweist, die exzentrisch sind, derart, dass sich der Schwerpunkt des beladenen Schlittens (40) in der vertikalen Verstauposition in Längsrichtung zwischen den zwei Abstützpunkten (58) und den vertikalen Teilstücken (28) befindet, wobei sich das proximale Ende (42A) des Schlittens (40) auf den zweiten Abstützpunkten (58) zwischen einer Zwischenposition, in der der Schlitten (40) in das Gepäckfach geneigt ist, und seiner vertikalen Verstauposition vertikal abstützt.

9. Ausrüstung nach dem vorhergehenden Anspruch, **dadurch gekennzeichnet, dass** der zweite proximale Abstützpunkt (58) durch zweite Rollen (58), die wie die ersten Rollen (58A) beschaffen sind, oder durch Kufen gebildet ist.

10. Ausrüstung nach einem der vorhergehenden Ansprüche, **dadurch gekennzeichnet, dass** sie Mittel für die Unterstützung der Verlagerung des Schlittens (40) umfasst, die eine nachgiebige Zugverbindung (62) wie etwa einen Gurt umfassen, der am distalen Ende (42B) des Schlittens (40) befestigt ist und um eine Drehachse (64), die in der Nähe des oberen Endes (28B) des vertikalen Teilstücks (28) jeder Schiene (25) angeordnet ist, aufgewickelt werden kann.

11. Ausrüstung nach dem vorhergehenden Anspruch, **dadurch gekennzeichnet, dass** sie eine Umlenkstange (68) der Zugverbindung (62) aufweist, die längs des vertikalen Teilstücks (28) jeder Schiene (25) zwischen einer oberen Position, in der sie durch den Schlitten (40) bei ihrer Rückkehr in die Verstauposition geschoben wird, und einer unteren Position, in der sie am unteren Ende des vertikalen Teilstücks (28) jeder Schiene (25) anliegt, frei gleitend montiert ist, derart, dass eine longitudinale Umlenkung für die Zugverbindung (62) gebildet wird.

12. Ausrüstung nach einem der Ansprüche 10 oder 11,
**dadurch gekennzeichnet, dass** das Aufwickeln und Abwickeln der Zugverbindung (62) um ihre Drehachse (64) durch einen Elektromotor (76) oder manuell gesteuert wird.

13. Ausrüstung nach einem der Ansprüche 2 bis 12, **dadurch gekennzeichnet, dass** das Gepäckfach (10) wenigstens zwei seitliche Streben (35) umfasst und dass das Gepäckfach (10) wenigstens ein Gestell (88) aufnehmen kann, das auf Anschlägen (90) montiert ist, die von seitlichen Streben (35) einerseits und von dem vertikalen Teilstück (28) jeder Schiene (25) andererseits getragen werden.

14. Ausrüstung nach dem vorhergehenden Anspruch, **dadurch gekennzeichnet, dass** die Anschläge (90) von Gleitern (92) getragen werden, die in der Gleitschiene (32) des vertikalen Teilstücks (28) jeder Schiene (25) aufgenommen werden können und durch Einklemmen fixiert sind.

15. Ausrüstung nach dem vorhergehenden Anspruch, **dadurch gekennzeichnet, dass** die seitlichen Streben (35) durch Gleitschienen (32) gebildet sind, die jenen des vertikalen Teilstücks (28) jeder Schiene (25) ähnlich sind und die Anschläge (90), die von den Gleitern (92) getragen werden, aufnehmen können.
